# EUROPEAN PATENT SPECIFICATION

(11) **EP 2 145 521 B1**
(45) Date of publication and mention of the grant of the patent: **26.10.2011**
(21) Application number: 09008778.4
(22) Date of filing: 03.07.2009
(51) Int. Cl.: A01D 34/90, A01D 34/82, B25F 5/00

(54) **Vibration controlling handle for a bush cutter**
Vibrationsmindernder Handgriff für einen Buschschneider
Poignée refrénante la vibration d'un coupeur de buissons

(30) Priority: 16.07.2008 JP 2008184981
(43) Date of publication of application: 20.01.2010
(73) Proprietor: STARTING INDUSTRIAL CO., LTD., Tokyo 167 (JP)
(72) Inventor: Okabe, Hiroshi, Tokyo (JP); Nishimura, Takehiko, Tokyo (JP)
(74) Representative: Kramer - Barske - Schmidtchen

(56) References cited:
- EP-A1- 1 661 447
- JP-A- 2003 225 011
- JP-A- 2005 058 080
- US-A- 3 581 832
- US-A- 4 236 310
- US-A- 5 345 684

## Description

### BACKGROUND OF THE INVENTION

### Field of the Invention

An aspect of the present invention relates to a portable bush cutter which can effectively absorb vibrations of an engine part at a maneuvering handle.

### Background Art

In related art bush cutters, an engine for driving a working part is provided at a proximal portion of a pole, while a cutter blade is provided at a distal end of the pole, and the cutter blade and the engine part are connected together by a drive shaft. In addition, a handle to be gripped by the hands of an operator is provided at an intermediate portion along the length of the pole, whereby the bush cutter is maneuvered while levers, which are disposed on the handle in positions near the grips, are manipulated to control the engine part. In this configuration, since the vibration of the engine part is transmitted directly to the hands of the operator, there is caused a problem that the operator feels physical discomfort and fatigue when maneuvering the bush cutter for a long time. Because of this, some related art bush cutters are provided with vibration isolating measures. As the vibration isolating measures, a vibration isolating member made up of a vibration isolating rubber or metallic spring is disposed between the engine part and the grip portions, so that vibrations from the engine part are attenuated by the interposed vibration isolating member and so that the transmission of vibrations of the engine part to the grip portions is prevented as much as possible.

Such a vibration isolating member is provided between the engine part and the pole, so that vibrations from the engine part are not transmitted to the pole (for example, refer to JP-2003-225011-A and JP-2005-058080-A).

Further, in the related art vibration isolating structure that has been described above, although the engine part and the pole part are isolated from each other completely, it is difficult to isolate completely the engine part and the drive shaft which transmits the output of the engine part to the cutter blade, and the isolation serves to reduce the connecting strength between the engine part and the pole part. Therefore, the vibration isolating member has to enhance the coupling strength between the engine part and the pole. Consequently, there is a disadvantage that the vibration isolating structure itself has to be made more complex and/or elaborate.

US 4,236,310 A discloses a portable working implement having means for alleviating vibrations transferred from the motor and the cutting device to a pipe connecting these members and from there onto a handle section. The handle section is provided with two sleeves with an elastic cushion which is generated by a medium provided in a hollow chamber. By adjusting the pressure medium in the hollow chamber the rigidity characteristic can be adjusted.

EP 1661447 A1 discloses a rotary cutter having a handle portion which is provided on an intermediate portion of a pole between the cutting device and the engine part. The handle includes a handle part formed integrally and having a U-shaped configuration.

In these situations, the development of a vibration isolating structure is now desired which can suppers the substantive weight of a bush cutter without increasing rigidity of a vibration isolating member itself as a connecting member between an engine part and a pole of the bush cutter and which can suppress effectively the transmission of vibrations between the engine part and grip portions.

### SUMMARY OF THE INVENTION

One of objects of the present invention is to provide the bush cutter which includes a vibration isolating structure for effectively cutting off vibrations that are transmitted from the engine part to the grip portions by not providing the vibration isolating structure between the engine part and the pole but placing the vibration isolating structure between the handle and the pole.

According to a first aspect of the present invention, there is provided a portable bush cutter including: a pole; a working part that is provided at one end of the pole; an engine part that drives the working part and that is provided at the other end of the pole; a drive shaft that connects the working part and the engine part; a maneuvering handle that is provided on as intermediate portion of the pole along a length direction thereof; and a vibration isolating member that is interposed between the maneuvering handle and the pole.

According to a second aspect of the present invention, at least two vibration isolating members may be provided between the maneuvering handle and the pole.

According to a third aspect of the present invention, the vibration isolating member may be elastically deformable in a vertical direction.

According to a fourth aspect of the present invention, the vibration isolating member may be elastically deformable in a horizontal direction.

According to a fifth aspect of the present invention, the portable bush cutter may further include an adjustment mechanism that adjusts an initial compression amount of the vibration isolating member.

According to a sixth aspect of the present invention, the maneuvering handle may include an engine controlling switch.

According to a seventh aspect of the present invention, the maneuvering handle may include a second handle formed in a U-shape or a loop-shape and formed integrally thereon.

According to an eighth aspect of the present invention, the maneuvering handle may be provided so as to suspend the brush cutter main body thereon.

According to a ninth aspect of the present invention, the maneuvering handle may include: a grip member having a first end and a second end opposite to the first end; a plurality of attaching portions, at least one of the attaching portions on the first end, and at least another one of the attaching portions on the second end; and a plurality of suspension rods extending distally from the attaching portions. A plurality of support members may be provided at least on the first and second ends of the grip member, each support member having: holding pieces formed to sandwich the pole therebetween; and a hole formed to accommodate the corresponding suspension rod. And, a plurality of vibration isolating members may be provided correspondingly with the attaching portions so as to be each interposed between the suspension rod and the hole.

According to a tenth aspect of the present invention, each vibration isolating member may be formed of an elastomer material. Each vibration isolating member may include: a first portion having a first diameter; and a second portion having a second diameter smaller than the first diameter. Each suspension rod may have a diameter smaller than the second diameter. And, each hole may have a diameter smaller than the first diameter and larger than the second diameter.

According to an eleventh aspect of the present invention, each vibration isolating member may include: a first coil spring having a first diameter; and a second coil spring having a second diameter smaller than the first diameter. Each suspension rod may have a diameter smaller than the second diameter. And, each hole may have a diameter smaller than the first diameter and larger than the second diameter.

According to a twelfth aspect of the present invention, there is provided a vibration controlling handle four a tool that is driven by an engine, the vibration controlling handle including: a grip member having a first end and a second end opposite to the first end; a plurality of attaching portions, at least one of the attaching portions on the first end, and at least another one of the attaching portions on the second end; a plurality of suspension rods extending dismally from the attacking portions; a plurality of support members being provided at least on the first and second ends of the grip member and each having holding pieces formed to attach the vibration controlling handle to the tool and a hole formed to accommodate the corresponding suspension rod; and a plurality of vibration isolating members provided correspondingly with the attaching portions so as to be each interposed between the suspension rod and the hole.

According to the first aspect of the invention, since the maneuvering handle disposed at the intermediate portion along the length of the pole so that the bush cutter main body is suspended thereon, and since the vibration isolating member is interposed between the handle and the pole, when the bush cutter is used, the vibration isolating member is naturally compressed, and therefore, the isolation between the handle and the bush cutter main body is performed naturally. Consequently, no particular structure for isolation of the handle from the bush cutter main body is necessary. Moreover, since the vibration isolating member does not have to be connected strongly and rigidly to the handle and the pose, the structure can be simplified.

According to the second aspect of the invention, since at least two vibration isolating members are provided between the handle and the pole, the bush cutter can be stably held when being suspended, thereby enhancing the working properties.

According to the third aspect of the invention, since the vibration isolating member is made to be extended and compressed in the vertical direction, the vertical vibrations of the bush cutter main body can be absorbed effectively so that vibrations to be transmitted to the handle can be cut off.

According to the fourth aspect of the invention, since the vibration isolating member is made to be extended and compressed in the horizontal direction, the horizontal vibrations of the bush cutter main body can be absorbed effectively so that vibrations to be transmitted to the handle can be cut off.

According to the fifth aspect of the invention, since the initial compression amount of the vibration isolating member is made possible to be controlled, the compression amount of the vibration isolating member can be appropriately set by taking into account the fatigue thereof induced by bearing the weight of the bush cutter, for example.

According to the sixth aspect of the invention, since the engine control switch is provided on the handle, the engine part can be controlled to be operated by the handle, and at the time of emergency, the engine can be stopped without no delay so as to secure the safety of the operator and the like during the bush cutting work, for example.

According to the seventh aspect of the invention, singe the additional U-shaped or ioop-shaped handle is formed integrally on the handle, the bush cutter becomes easy to be handled, thereby enhancing the working properties and maneuverability.

### BRIER DESCRIPTION OF THE DRAWINGS

Fig. 1A is a front view showing an attaching mode of a handle in a portable bush cutter according to an embodiment of the present invention; Fig. 1B is a plan view of Fig. 1A; and Fig. 1C is a side view of Fig. 1A.
Fig. 2 is a sectional view taken along the line X-X in Fig. 1A.
Fig. 3 is a side view of the portable brush cutter of Fig. 1A showing a state in which a handle is lifted up.
Fig. 4A is a front view of a handle of a portable bush cutter according to another embodiment of the present invention; and Fig. 4B is a sectional view taken along the line Y-Y in Fig. 4A.
Fig. 5A is a front, view of a handle of a portable bush cutter according to still another embodiment of the present invention; and Fig. 5B is a sectional view taken along the line Z-Z in Fig. 5A.
Fig. 6 is a sectional view of a handle of a potable bush cutter showing a state in which another type or vibration isolating member is used.
Fig. 7 is a sectional view of a handle of a portable bush cutter showing a state in which still another type of vibration isolating member is used.
Figs. 8A, 8B and 8C are a front view, a plan view and a side view showing the portable bush cutter according to an embodiment, respectively.

### DETATLED DESCRIPTION OF SXEMPLARY EMBODIMENTS

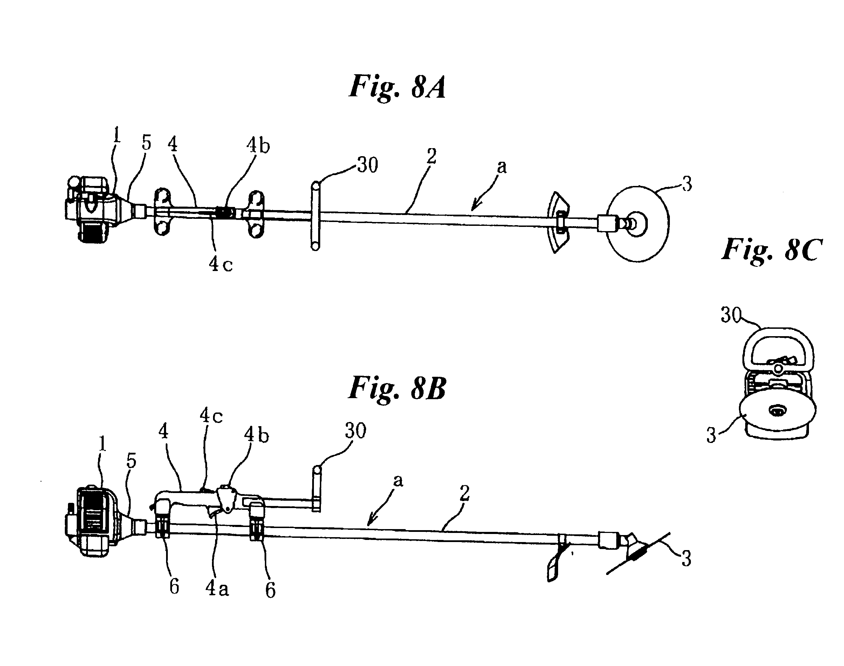

As is shown in Figs. 8A, 8B and 8C, a portable bush cutter according to an embodiment includes an engine part 1 and a pole 2 which extends from the engine part 1 with a proximal portion thereof connected to the engine part 1, and a cutter blade 3 (a working part) is supported rotatably at a distal end of the pole 2. In addition, a maneuvering handle 4 is attached to a bush cutter main body a which is made up of the engine part 1, the pole 2 and the cutter blade 3. The handle 4 is attached to the pole 2 at a position closer to the engine part 1, so that when performing bush cutting work, the handle is gripped by the operator, and the bush cutter main body a is suspended on the handle 4.

The pole 2 is a hollow tube in which a drive shaft (not shown) is supported rotatably. The drive shaft is connected to the engine part 1 via a clutch at a proximal portion thereof so as to be driven by the engine part 1 to rotate the cutter blade 3 that is supported rotatably at the distal end of the pole 2.

The handle 4 is attached to an intermediate portion of the pole 2 closer to the engine part 1 along the length direction of the pole 2. By adjusting the attaching position, the weight balance of the bush cutter during bush cutting work can be appropriately adjusted.

The handle 4 is formed to have a shape to be easily gripped by the hands, and a trigger lever 4a is provided on the handle 4 at a position to be easily manipulated while gripping the handle 4. An operation of the engine part 1 is controlled via a throttle wire by manipulating the trigger lever 4a. Further, there may be provided other kinds of levers and switches, such as an engine stop switch 4b to be operated by the finger, a safety lever 4c to lock the operation of the trigger lever 4a and the like. By the configuration, the operator is enabled to not only operate the engine part 1 by the handle 4 but also to stop the engine part 1 immediately at the time of emergency, for example. As a result, for example, the safety of the operator and the like during the bush cutting work is secured.

The pole 2 and the handle 4 are connected via a vibration isolating structure. Here, the vibration isolating structure will be described in derail.

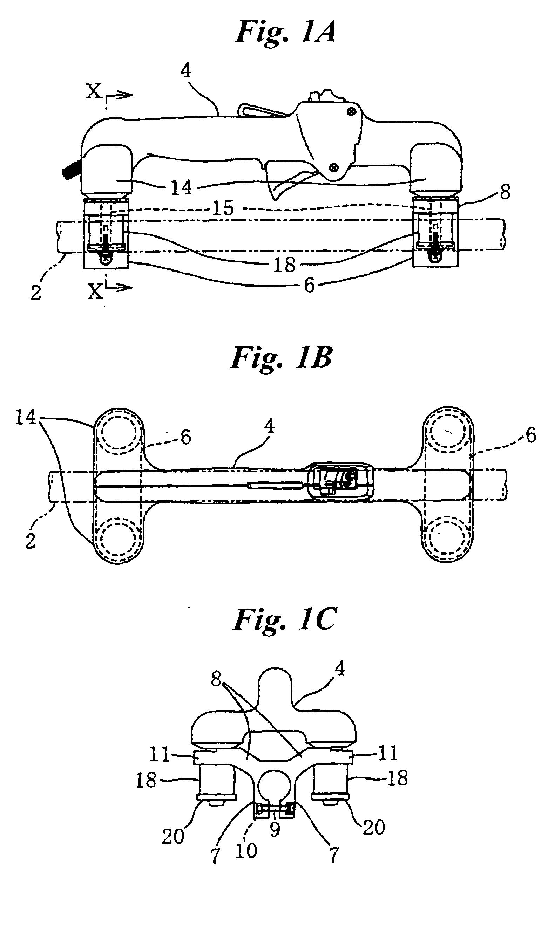

As is shown in Figs. 1A to 1C and other figures, a pair of supporting members 6 including a front support member and a rear support member are fixed to the intermediate portion of the pole 2. Each support member 6 includes holding pieces 7 that hold the pole 2 therebetween and support arms 8 that are provided above the holding pieces 7 and that extend from the holding pieces 7 to be apart from each other in a left-right direction. In other words, the holding pieces 7 and the support arms 8 form a configuration in the shape of a Y, as shown, e.g., in Fig. 1C. The pole 2 is held between the holding pieces 7, and then fixed with a bolt 9 and a nut 10. The support arms 8 are provided in four locations in total. Each of the support arms 8 has a support portion 11 and a circularly tubular hollow portion 12, which is formed in a center of an upper surface of the support portion 11.

Both ends of the handle 4 are bifurcated. Each of the four end portions (i.e., two at each end of the handle 4) are provided with an attaching portion 14 on a lower surface of the respective end portion. In each attaching portion 14, a cylindrical suspension rod 15 is formed to be suspended vertically from the center of the lower surface of the attacking portion 14. In other words, the handle 4 includes four attaching portions 14, each with a cylindrical suspension rod 15 extending through the center of the lower surface thereof. On the lower surface of each attaching portion 14, an annular fitting groove 16 is also formed around the cylindrical suspension rod 15. The cylindrical suspension rods 15 are formed to be smaller in diameter than an inside diameter of the hollow portions 12, and a threaded hole 17 is formed in an end portion of each cylindrical suspension rod 15.

The handle 4 is attached to the support portions 6 via a plurality of vibration isolating members 18. Each vibration isolating member 18 has a hollowed shape including a large diameter portion 18a and a small diameter portion 18b formed above the large diameter portion 18a, and is formed of an elastic material such as an elastomer.

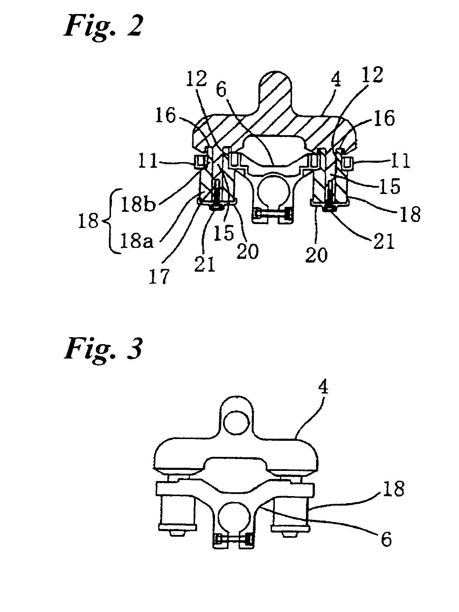

As is shown in Fig. 2, first, the vibration isolating members 18 are set into the support members 6 so that the small diameter portions 18b are fitted through the corresponding hollow portions 12, and then, the support members 6 are set into the handle 4 so that the suspension rods 15 pass through the corresponding vibration isolating members 18 and so that upper ends of the hollow portions 12 are fitted into the corresponding flitting grooves 16. Further, receiving seats 20 are set below lower ends of the large diameter portions 18a, and bolts 21 are passed through the receiving seats 20 from the lower side and screwed into the threaded holes 17 in the suspension rods 15, whereby the handle 4 is fixed to the support members 6. As this occurs, upper surfaces of the large diameter portions 18a are brought into abutment with the lower surfaces of the attaching portions 14. When the bush cutter is not used, upper ends of the support members 6 may be in abutment with the lower surface of the handle 4.

By adopting the configuration in which the handle 4 is attached onto the support members 6 to be fixed to the pole 2 via the vibration isolating members 18, during bush cutting work, the handle 4 is gripped by the operator to maneuver the portable bush cutter, and the bush cutter main body a is suspended via the handle 4. When the bush cutter main body a is so suspended, since the vibration isolating members 18 receive the weights of the engine part 1 and the pole 2 to thereby be compressed, the handle 4 and the support members 6 are naturally isolated from each other. Although vibrations of the engine part 1 are transmitted to the support members 6 and further to the vibration isolating members 18, vertical components of the vibrations are absorbed by the elasticity of the large diameter portions 18a of the vibration isolating members 13 between the upper surfaces and lower surfaces thereof, while horizontal components of the vibrations are absorbed by the elasticity of the small diameter portions 18b. Consequently, the vibrations of the support members 6 are effectively cut off by the vibration isolating members 16, and no vibration is transmitted to the handle 4, whereby the operator can maneuver the bush cutter comfortably a all times during the bush cutting work without having to be subject to uncomfortable vibrations.

Further, since the vibration isolating members 18 do not have to connect strongly and rigidly the handle 4 to the pole 2, the structure of the vibration isolating members 18 can be made simple.

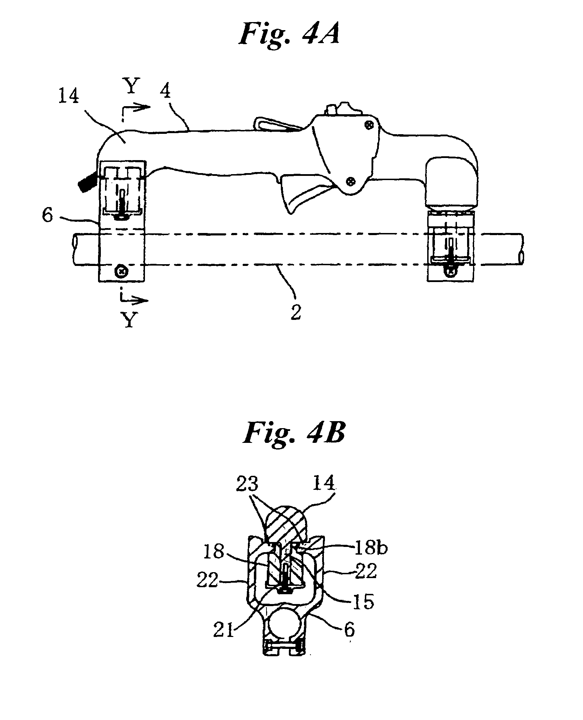

The position of the vibration isolating member 18 is not limited to the four locations on the handle 4 as shown in the above-described embodiment. For example, as is shown in Figs. 4A and 4B, vibration isolating members 18 may be provided in three locations in total; one location on the engine part 1 side of the support member 6 and two locations on the cutter blade 3 side of the support member 6. At the engine part 1 side, a plurality of support arms 22 (in this case two support arms, one on either side of the pole 2) are formed on the support member 6 so as to rise upwards therefrom, and support pieces 23 are formed at distal ends of the support arms 22, respectively, so as to extend inwards to face each other. A distal end of the support piece 23 is formed to have a circular arc shape. A suspension rod 15 is formed on a lower surface of an attaching portion 14 which is provided at an end portion of the handle 4 in such a manner as to be suspended vertically therefrom, and a vibration isolating member 18, which has a similar configuration to that of the vibration isolating member 18 described above, is fitted on the suspension rod 15. Then, a small diameter portion 18b is held between the support pieces 23 of the support arms 22, and a bolt 21 is passed through a receiving seat 20 from lower side and screwed into the suspension rod 15, whereby the support member 6 is fixed to the handle 4. The cutter blade 3 side is configured as in the above-described embodiment.

By the above-described configuration, in the same way as that ascribed previously, the handle 4 is isolated from the support members 6 when the handle 4 is gripped to lift the bush cutter, whereby since vibrations of the support member 6 are absorbed by the vibration isolating member 18, no vibration is transmitted to the handle 4.

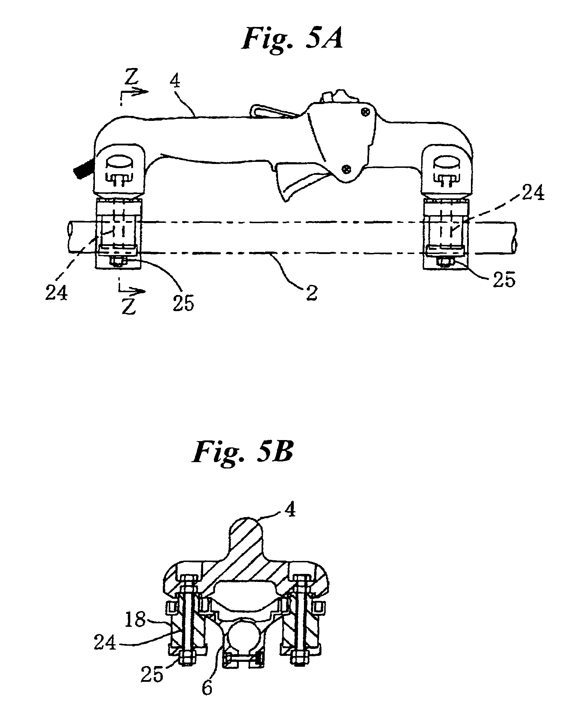

In place of forming the suspension rods 15 integrally on the attaching portions 14 of the handle 4 to be suspended therefrom in the way described above, as is shown in Fig. 5, a configuration in which the attaching portions 14 and the receiving seats 20 are fixed together with bolts 24 and nuts (double nuts) 25 may be adapted.

In this case, since an initial compression amount of the vibration isolating member 18 can be controlled by controlling the rotating amount of the nut 25, the compression amount of the vibration isolating member 18 which bears the weight of the bush cutter main body a can easily be set to a proper level in accordance with, for example, fatigue occurring in the vibration isolating member 18.

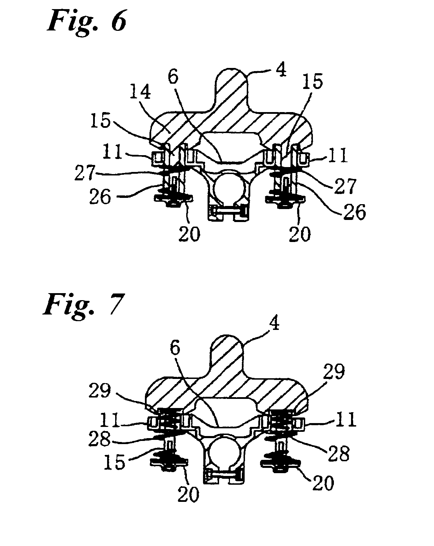

In place of the elastomer, the vibration isolating member may be formed of a combination of elastomer and coil spring or of a coil spring only. For example, in the vibration isolating member formed by combining an elastomer and a coil spring as shown in Fig. 6, an elastomer vibration isolating member 26 which is smaller in diameter is fitted on the suspension rod 15 of the attaching portion 14 of the handle 4, and a coil spring vibration isolating member 27 is disposed on an outer side of the elastomer vibration isolating member 26. In this case, the ends of the coil spring 27 are brought into engagement with the receiving seat 20 and a lower surface of the support portion 11 of the support member 6, respectively.

According to the above-described configuration, during bush cutting work, when the handle 4 is gripped to suspend the engine part 1 and the pole 2, since the coil spring receives the weights of the engine part 1 and the pole 2 to thereby be contracted, the handle 4 and the support members 6 are isolated from each other in a natural fashion. In vibrations which are transmitted from the engine part it to the support members 6, vertical vibrations are absorbed by the elasticity of the coil spring vibration isolating members 27, while horizontal vibrations are absorbed by the elasticity of the elastomer vibration isolating members 26. Consequently, the vibrations of the support members 6 are absorbed by the two types of vibration isolating members 26, 27.

For example, in the vibration isolating member formed of a coil spring only, a large diameter coil spring 25 and a small diameter coil spring 29 are employed as is shown in Fig. 7, the small diameter coil spring 29 is fitted on the suspension rod 15 of the attaching portion 19 of the handle 4, the larger diameter coil spring 28 is disposed on an outer side of the small diameter coil spring 29, and the ends of the large diameter coil spring 28 are brought into engagement with the receiving seat 20 and the lower surface of the support portion 11 of the support member 6, respectively.

According to the above-described configuration, when the handle 4 is gripped to suspend the engine part 1 and the pole 2, since the coil springs receive the weights of the engine part 1 and the pole 2 to thereby be contracted, the handle 4 and the support members 6 are isolated from each other in a natural fashion. In vibrations which are transmitted from the engine part 1 to the support members 6, vertical vibrations are absorbed by the elasticity of the large diameter coil springs 28, while horizontal vibrations are absorbed by the elasticity of the small diameter coils springs 29. Consequently, the vibrations of the support member 6 are absorbed by the vibration isolating members which are made up the two types of coil springs 28, 29.

In the embodiments shown in Figs. 6 and 7, in place of the suspension rods 15, the bolts shown in Fig. 5 may be used.

A loop-shaped second handle 30 as is shown in Figs. 8A, 8B and 8C may be fixed integrally to the handle 4, and although not shown in the figures, a U-shaped second handle may be fixed integrally to the handle 4. By providing the second handle, the handling of the bush cutter is facilitated, thereby improving the working properties and maneuverability.

While the present invention has been shown and described with reference to certain embodiments thereof, it will be understood by those skilled in the art that various changes in form and details may be made therein without departing from the scope of the invention as defined by the appended claims.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A vibration controlling handle (4) for a tool that is driven by an engine, the vibration controlling handle (4) comprising:
a grip member having a first end and a second end opposite to the first end;
a plurality of attaching portions (14), at least one of the attaching portions (14) on the first end, and at least another one of the attaching portions (14) on the second end;
a plurality of support members (6) being provided at least on the first and second ends of the grip member and each having holding pieces (7) formed to attach the vibration controlling handle (4) to a tool
and
a plurality of vibration isolating members (18, 26, 27, 28, 29) provided correspondingly with the attaching portions (14)
**characterized by**
a plurality of suspension rods (15) extending distally from the attaching portions (14);
wherein the plurality of support members (6) each has a hole (12) formed to accommodate the corresponding suspension rod (15); and
the plurality of vibration isolating member (18, 26, 27, 28, 29) is provided
so as to be each interposed between the suspension rod (15) and the hole (12).

2. The vibration controlling handle (4) according to Claim 1,
wherein at least two vibration isolating members (18, 26, 27, 28, 29) are provided between the handle (4) and a pole (2) of the tool.

3. The vibration controlling handle (4) according to Claim 1 or 2,
wherein the vibration isolating member (18, 26, 27, 28, 29) is elastically deformable in a vertical direction.

4. The vibration controlling handle (4) according to any one of the preceding claims,
wherein the vibration isolating member (18, 26, 27, 28, 29) is elastically deformable in a horizontal direction.

5. The vibration controlling handly (4) according to any one of the preceding claims, further comprising:
an adjustment mechanism (24, 25) that adjusts an initial compression amount of the vibration isolating member.

6. The vibration controlling handle (4) according to any one of the preceding claims,
wherein the handle (4) includes an engine controlling switch (4a).

7. The vibration controlling handle (4) according to any one of the preceding claims,
wherein the handle includes a second handle formed in a U-shape or a loop-shape and formed integrally thereon.

8. The vibration controlling handle (4) according to Claims 1,
wherein each vibration isolating member (18, 26, 27, 28, 29) is formed of an elastomer material,
wherein each vibration isolating member (18, 26, 27, 28, 29) includes:
a first portion (18a) having a first diameter; and
a second portion (18b) having a second diameter smaller than the first diameter,
wherein each suspension rod (15) has a diameter smaller than the second diameter, and
wherein each hole (12) has a diameter smaller than the first diameter and larger than the second diameter.

9. The vibration controlling handle (4) according to Claim 1, wherein each vibration isolating member (18, 26, 27, 28, 29) includes:
a first coil spring (28) having a first diameter; and
a second coil spring (29) having a second diameter smaller than the first diameter,
wherein each suspension rod (15) has a diameter smaller than the second diameter, and
wherein each hole (12) has a diameter smaller than the first diameter and larger than the second diameter.

10. A portable bush cutter comprising:
a pole (2);
a working part (3) that is provided at one end of the pole (2);
an engine part (1) that drives the working part (3) and that is provided at the other end of the pole (2);
a drive shaft that connects the working part (3) and the engine
part (1);
a maneuvering handle (4) according to any one of the preceding claims and that is provided on an intermediate portion of the pole (2) along a length direction thereof, wherein
the vibrations isolating member (18, 26, 27, 28, 29) is interposed between the maneuvering handle (4) and the pole (2).

## Patentansprüche

1. Vibrationskontrollgriff (4) für ein von einem Motor angetriebenes Werkzeug, wobei der Vibrationskontrollgriff (4) aufweist:
ein Griffteil, das ein erstes Ende und ein dem ersten Ende gegenüberliegendes zweites Ende aufweist;
eine Mehrzahl von Befestigungsbereichen (14), wobei wenigstens einer der Befestigungsbereiche (14) am ersten Ende und wenigstens ein anderer der Befestigungsbereiche (14) an dem zweiten Ende ist;
eine Mehrzahl von Stützteilen (6), die wenigstens an dem ersten und zweiten Ende des Griffteils vorgesehen sind und jeweils Haltestücke (7) aufweisen, die zum Befestigen des Vibrationskontrollgriffs (4) an einem Werkzeug gebildet sind; und
eine Mehrzahl von Vibrationsisolierungsteilen (18, 26, 27, 28, 29), die entsprechend mit den Befestigungsbereichen (14) versehen sind;
**gekennzeichnet durch**
eine Mehrzahl von sich distal von den Befestigungsbereichen (14) erstreckende Hängestangen (15);
wobei die Mehrzahl von Stützteilen (6) jeweils ein zum Aufnehmen der entsprechenden Hängestange (15) gebildetes Loch (12) aufweist; und
die Mehrzahl von Vibrationsisolierungsteilen (18, 26, 27, 28, 29) so vorgesehen ist, jeweils zwischen der Hängestange (15) und dem Loch (12) eingebracht zu sein.

2. Vibrationskontrollgriff (4) gemäß Anspruch 1,
wobei wenigstens zwei Vibrationsisolierungsteile (28, 26, 27, 28, 29) zwischen dem Griff (4) und einer Stange (2) des Werkzeugs vorgesehen sind.

3. Vibrationskontrollgriff (4) gemäß Anspruch 1 oder 2,
wobei das Vibrationsisolierungsteil (18, 26, 27, 28, 29) in einer vertikalen Richtung elastisch verformbar ist.

4. Vibrationskontrollgriff (4) gemäß einem der vorhergehenden Ansprüche,
wobei das Vibrationsisolierungsteil (18, 26, 27, 28, 29) in einer horizontalen Richtung elastisch verformbar ist.

5. Vibrationskontrollgriff (4) gemäß einem der vorhergehenden Ansprüche, ferner aufweisend:
einen Einstellmechanismus (24, 25), der ein anfängliches Kompressionsausmaß des Vibrationsisolierungsteils einstellt.

6. Vibrationskontrollgriff (4) gemäß einem der vorhergehenden Ansprüche,
wobei der Griff (4) einen Motorsteuerungsschalter (4a) aufweist.

7. Vibrationskontrollgriff (4) gemäß einem der vorhergehenden Ansprüche,
wobei der Griff einen in einer U-Form oder einer Schleifenform und ganzheitlich an diesem gebildeten zweiten Griff enthält.

8. Vibrationskontrollgriff (4) gemäß Anspruch 1,
wobei jedes Vibrationsisolierungsteil (18, 26, 27, 28, 29) aus einem Elastomermaterial gebildet ist,
wobei jedes Vibrationsisolierungsteil (18, 26, 27, 28, 29) aufweist:
einen ersten Bereich (18a), der einen ersten Durchmesser aufweist; und
einen zweiten Bereich (18b), der einen zweiten Durchmesser aufweist, der kleiner als der erste Durchmesser ist,
wobei jede Hängestange (15) einen Durchmesser aufweist, der kleiner als der zweite Durchmesser ist, und
wobei jedes Loch (12) einen Durchmesser aufweist, der kleiner als der erste Durchmesser und größer als der zweite Durchmesser ist.

9. Vibrationskontrollgriff (4) gemäß Anspruch 1,
wobei jedes Vibrationsisolierungsteil (18, 26, 27, 28, 29) aufweist:
eine erste Schraubenfeder (28), die einen ersten Durchmesser aufweist; und
eine zweite Schraubenfeder (29), die einen zweiten Durchmesser aufweist, der kleiner als der erste Durchmesser ist,
wobei jede Hängestange (15) einen Durchmesser aufweist, der kleiner als der zweite Durchmesser ist, und
wobei jedes Loch (12) einen Durchmesser aufweist, der kleiner als der erste Durchmesser und größer als der zweite Durchmesser ist.

10. Tragbarer Buschschneider mit:
einer Stange (2);
einem Arbeitsteil (3), das an einem Ende der Stange (2) vorgesehen ist;
einem Motorteil (1), das das Arbeitsteil (3) antreibt und das an dem anderen Ende der Stange (2) vorgesehen ist;
einer Antriebswelle, die das Arbeitsteil (3) und das Motorteil (3) verbindet;
einem Bediengriff (4) gemäß einem der vorhergehenden Ansprüche und der an einem Zwischenbereich der Stange (2) entlang einer Längsrichtung von dieser vorgesehen ist, wobei
das Vibrationsisolierungsteil (18, 26, 27, 28, 29) zwischen dem Bediengriff (4) und der Stange (2) eingebracht ist.

## Revendications

1. Poignée anti-vibrations (4) pour un outil qui est entraîné par un moteur, la poignée anti-vibrations (4) comprenant :
un élément de préhension ayant une première extrémité
et une seconde extrémité opposée à la première extrémité ;
une pluralité de portions de fixation (14), au moins
l'une des portions de fixation (14) sur la première extrémité et au moins une autre des portions de fixation (14) sur la seconde extrémité ;
une pluralité d'éléments de support (6) étant aménagés
au moins sur les première et seconde extrémités de l'élément de préhension et ayant chacune des pièces de blocage (7) formées pour fixer la poignée anti-vibrations (4) à un outil ; et
une pluralité d'éléments d'isolement
antivibratoire (18, 26, 27, 28, 29) munis de manière correspondante des portions de fixation (14),
**caractérisée par**
une pluralité de tiges de suspension (15) s'étendant
de manière distale des portions de fixation (14) ;
dans laquelle la pluralité d'éléments de support (6)
présente un orifice (12) formé pour recevoir la tige de suspension (15) correspondante ; et
la pluralité d'éléments d'isolement
antivibratoire (18, 26, 27, 28, 29) est mise en oeuvre de manière à être chacun intercalé entre la tige de suspension (15) et l'orifice (12).

2. Poignée anti-vibrations (4) selon la
revendication 1,
dans laquelle au moins deux éléments d'isolement
antivibratoire (18, 26, 27, 28, 29) sont aménagés entre la poignée (14) et un axe (2) de l'outil.

3. Poignée anti-vibrations (4) selon la
revendication 1 ou 2,
dans laquelle l'élément d'isolement
antivibratoire (18, 26, 27, 28, 29) peut être soumis à une déformation élastique dans une direction verticale.

4. Poignée anti-vibrations (4) selon l'une quelconque
des revendications précédentes,
dans laquelle l'élément d'isolement
antivibratoire (18, 26, 27, 28, 29) peut être soumis à une déformation élastique dans une direction horizontale.

5. Poignée anti-vibrations (4) selon l'une quelconque des revendications précédentes, comprenant en outré :
un mécanisme d'ajustement (24, 25) qui ajuste une
quantité de compression initiale de l'élément d'isolement antivibratoire.

6. Poignée anti-vibrations (4) selon l'une quelconque
des revendications précédentes,
dans laquelle la poignée (4) comprend un
commutateur (4a) de commande du moteur.

7. Poignée anti-vibrations (4) selon l'une quelconque
des revendications précédentes,
dans laquelle la poignée comprend une seconde poignée
en forme de U ou de boucle et formée d'une seule pièce sur celle-ci.

8. Poignée anti-vibrations (4) selon la
revendication 1,
dans laquelle chaque élément d'isolement
antivibratoire (18, 26, 27, 28, 29) est formé d'un matériau élastomère,
dans laquelle chaque d'isolement antivibratoire (18, 26, 27, 28, 29) comprend :
une première portion (18a) ayant un premier diamètre ;
et
une seconde portion (18b) ayant un second diamètre inférieur au premier diamètre ; et
dans laquelle chaque tige de suspension (15) a un diamètre inférieur au second diamètre ; et
dans laquelle chaque orifice (12) a un diamètre inférieur au premier diamètre et supérieur au second diamètre.

9. Poignée anti-vibrations (4) selon la revendication 1,
dans laquelle chaque élément d'isolement antivibratoire (18, 26, 27, 28, 29) comprend :
un premier ressort hélicoïdal (28) ayant un premier diamètre ; et
un second ressort hélicoïdal (29) ayant un second diamètre inférieur au premier diamètre ; et
dans laquelle chaque tige de suspension (15) a un diamètre inférieur au second diamètre ; et
dans laquelle chaque orifice (12) a un diamètre inférieur au premier diamètre et supérieur au second diamètre.

10. Débroussailleuse portable comprenant :
un axe (2) ;
une partie de travail (3) qui est aménagée à une extrémité de l'axe (2) ;
une partie motrice (1) qui entraîne la partie de travail (3) et qui est aménagée à l'autre extrémité de l'axe (2) ;
un arbre d'entraînement qui raccorde la partie de travail (3) et la partie motrice (1) ;
une poignée de manoeuvre (4) selon l'une quelconque des revendications précédentes et qui est aménagée sur une portion intermédiaire de l'axe (2) dans sa direction longitudinale ; dans laquelle l'élément d'isolement antivibratoire (18, 26, 27, 28, 29) est intercalé entre la poignée de manoeuvre (4) et l'axe (2).
